# EUROPEAN PATENT APPLICATION

(11) **EP 1 425 976 A1**
(43) Date of publication of application: **09.06.2004**
(21) Application number: 03078804.6
(22) Date of filing: 02.12.2003
(51) Int. Cl.: A23G 3/02

(54) **Filled sugar confectionery articles**

(30) Priority: 02.12.2002 EP 02080033
(71) Applicant: QUEST INTERNATIONAL B.V., 1411 GP Naarden (NL)
(72) Inventor: Dekker, Rob, 1217 NX Huizen (NL); Kloosterziel, Bert, 4003 ZW Tiel (NL)
(74) Representative: van Westenbrugge, Andries

(57) **Abstract**

There is provided a process for producing outer shells of filled sugar confectionery articles, wherein formation of the confectionery mass is obtained via a cooling member having a temperature lower than minus 50°C. Apparatus for carrying out the process are also herein provided as well as filled confectioneries obtainable by the process.

## Description

### TECHNICAL FIELD OF THE INVENTION

The present invention relates to filled sugar confectionery articles such as gums like wine gums, jellies, toffees, caramels, marshmallows, hard boiled sweets, nougats, preferably wine gums. In particular, the present invention relates to a process for making the outer shell of said sugar confectionery articles.

### BACKGROUND OF THE INVENTION

Wine gum is the common name for sugar confectionery gum based on gelatin or on a combination of gelatin and starch. When based on pectin, agar and the like, the product is often referred to as jellies. These products can also be modified to contain a low amount of filling such that they typically consist of an edible shell and a liquid filling. The liquid provides, depending on the nature of the filling, a pleasant soothing effect on the throat or a flavouring or acidulating effect in the mouth.

Products in the form of cough drops have long been known as vehicles for the delivery of medicaments aimed at soothing sore or irritated throats. Products in the form of aroma drops have also long been known and have now been in rising demand by consumers.

Further, there is a need among consumers for a filled sugar confectionery which provides a full mouth of liquid filling.

In addition, it has been found that the liquid filling enhances the juicy character of the product, especially for fruit flavours products. Accordingly, it is an object of the invention to provide filled sugar confectionery with a good juicy character.

Typically, processes for making such liquid filled sugar confectionery when the confectionery is a hard candy or a chewy candy make use of extrusion and rope-forming processes such as those described in US 6,280,762. Filled wine gum, on the other hand are typically made by a depositing process.

However, a problem with these types of processes is the amount of filling that can be incorporated. Hence, the filling is often incorporated in an amount such that the weight ratio of filling to the outer shell is below 0.3. As a result, the perception of the filling in the mouth upon opening of the shell is well below the consumer's expectations.

Still another problem encountered with these processes, in particular with the extrusion process, is that the viscosity of the filling and of the shell are similar. This is an important requirement for the production process. As a result of this, the perception of the juicy character is diminished.

Accordingly, it is an object of the present invention to provide filled sugar confectioneries which provide an improved perception of liquid filling in the mouth.

Still another problem with these types of processes is the tendency of the resulting products to give rise to the leakage of their filling upon storage. The reason for this leakage is believed to be associated with the location of the filling within the confectionary product. Indeed, current processes have a tendency to produce filled confectionery where the filling is often not properly centered. As a consequence, the shell presents a non-uniform resistance to the pressure from the filling, thus producing a weakened shell which leads to leakage of the filling upon storage.

Accordingly, it is also an object of the present invention to provide filled sugar confectioneries with reduced leakage of the filling upon storage.

A solution to such a leakage problem would be to provide a protection surrounding the shell, for example by coating the shell. However, whilst this solution would provide a solution to the leakage problem, this would not only rise the cost of production of said confectionery but also lower the perception of full mouth filling.

It has now been found that a manufacturing process that comprises the application of a cold member to a preheated confectionery mass, wherein such cold member has a temperature lower than minus 50°C enables the production of a filled confectionary article that does not exhibit the above mentioned drawbacks.

Application of a cold mould member is known in the art of manufacturing chocolate confectionery. EP 0,589,820 describes that a cold mould member preferably in a form of a cone is applied to a tempered mass of chocolate mixture, wherein the cold mould member has a temperature below 0°C, preferably ranging between minus 15°C and minus 30°C.

However, it has been found by the present inventors that application of such a cold mould member is not suitable for producing outer shells made of sugar confectionery mass. It was found that these cold mould members resulted in sticking of the sugar confectionery mass to the cold member mould thus preventing its removal and as a result preventing the formation of an outer shell.

One solution to this problem that was suggested by the inventors of the present application was to replace the iron cone as described in EP 0,589,820 by a Teflon cone. Teflon is known for its anti-sticking properties. However, despite the known anti-sticking properties of Teflon, the sugar confectionery mass was still found to stick to the member having a temperature range between minus 15°C and minus 30°C.

Thus, based on the above mentioned experiments, it can be concluded that a solution known for chocolate manufacture is not transposable to the field of confectionery manufacture. Indeed, it is known that application of chocolate techniques process are not that easily transposed to confectionery as these have different compositions and different mechanism of setting. Setting is defined as the transformation from the liquid to the solid state. For chocolate, this solidification takes place by fat crystallization, whereas for sugar confectionery, setting takes generally place by viscosity increase on cooling due to the use of a super-saturated sugar solution, i.e. containing from 60 to 99% by weight of the mass of sugar. In the specific case of gums such as winegums and jellies, the viscosity increase will be accompanied by the formation of a gel, i.e. a three-dimensional network. In other words, heated chocolate will upon cooling crystallize thereby giving its desired appearance whereas for sugar confectionery, it is not crystallization that is desired but viscosity increase by use of a super-saturated sugar solution and/or viscosity increase and gelation in case a gelling agent like gelatin is employed.

Despite the existing prejudice, it has now been surprisingly found by the present inventors that the application of a cold member having a temperature of lower than minus 50°C avoids the sticking of the sugar confectionery mass to the cold member.

### SUMMARY OF THE INVENTION

In one aspect of the present invention, there is provided a process for producing outer shells of sugar confectionery articles, wherein a cooling member is immersed, e.g. fully immersed, into a pourable or aerated sugar confectionery mass prior to its solidification and is kept in the mass in an immersed position for a predetermined period of time to define a predetermined shell volume, the cooling member having a temperature lower than minus 50°C, and the pourable or aerated sugar confectionery mass solidifying, under cooling, inwardly to form the outer shape of the shell.

In another aspect of the present invention, there is provided an apparatus for producing sugar confectionery articles comprising:
a. one or more mould cavities for holding a confectionery mass;
b. means for transferring a liquid or aerated confectionary mass into said mould cavities;
c. one or more cooling members or means for producing such cooling members;
d. cooling means capable of reducing the temperature of the cooling members to a temperature lower than minus 50°C;
e. means for moving the one or more cooling members in and out of the one or more mould cavities;
f. the arrangement of mould cavities, cooling members and means e. being such that the cooling member can be moved into the mould cavities in such a way that a cup-shaped space is defined between the mould cavity and the cooling member.

In a further aspect of the present invention, there is provided filled sugar confectionery articles obtainable by the invention process, wherein the weight ratio of filling to the outer shell is within the range of 0.5 to 5.

### BRIEF DESCRIPTION OF THE DRAWING

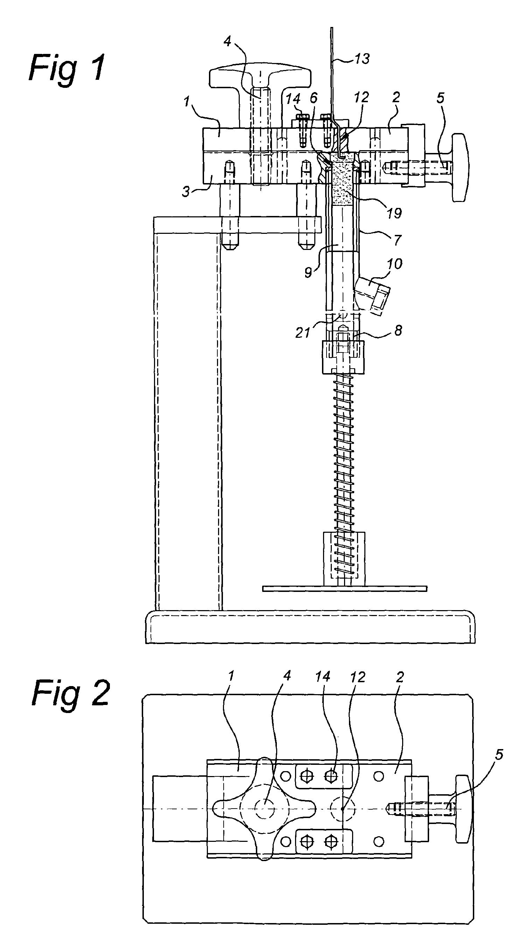

Figure 1 is a schematic side view of a mould for forming a cold member.

### DETAILED DESCRIPTION OF THE INVENTION

### Pourable or aerated sugar confectionery mass

The use of a pourable or aerated sugar confectionery mass is an essential element of the present invention.

By "pourable", it is meant that the (pre-heated) mass is a liquid (rather than a solid or a powder) and that it can be removed from its container by holding the container upside down without having to use any force other than gravity. In the event of the mass not being pourable at room temperature or even to make the mass more pourable, a preheating step may suitably be applied to the mass, thereby making the mass (more) pourable. Preferred heating ranges are in the boiling ranges, more preferably in the range of from 107 to 165°C.

By "aerated", it is meant that the mass has a density of less than about 1 g/cc, preferably of from 0.1 to 1g/cc, and more preferably from 0.1 to 0.4g/cc. Typical products having such densities are marshmallows made by an extrusion process. Such an aerated mass may suitably be shaped in accordance with the present method by pushing the cooling member into the aerated mass and (further) solidifying said aerated mass.

For the purpose of the present invention, the sugar confectionery mass preferably comprises as a main ingredient sugar.

By "sugar", it is meant ingredients selected from sucrose, glucose, lycasine, xylitol, mannitol, other polyhydric alcohols, dipeptide sweeteners, and mixtures thereof.

Commercial grade glucose (dextrose) such as spray dried corn syrup solids produced by Corn Products Co. (France) and having a particle size specification of "MOR SWEET"™ 4x size has been determined to be a satisfactory component of the formulation.

In those formulations, where a low nutritive value is desired, agents such as dipeptide sweeteners, particularly L-aspartyl-L-phenylalanine, methyl ester, saccharine, cyclamates, glycyrrhizin and other non-nutritive sweeteners can also be employed, particularly with a modified polydextrin or glucose polymer as a bulking agent.

Typical levels of sugar are of from 50 to 99% by weight, based upon the total weight of the mass taken as 100% by weight. Preferably, for gum and jellies, the amount of sugar is of from 70 to 85% by weight. For hard boiled candies, levels of sugars of from 80-99% by weight are preferred.

There should also be sufficient water present in the mixture so that the total mixture moisture content is from about 1-30% by weight based upon the total weight of the mixture taken as 100% by weight. Preferably, for gum and jellies, the total mixture moisture content is of from 15 to 30% by weight. For hard boiled candies, a total mixture moisture content of from 1-3% by weight is preferred.

Although optional, the addition of a binder to the sugar confectionery mass is advantageous as it will improve the structure of the confectionery mass. More preferably, the binder is used as an aqueous solution. When present, the binder is typically selected from edible grade gelatin, gum arabic, pectin, agar, starch, and mixtures thereof. Most preferred binders for use herein are edible grade gelatin and/or gum arabic. Most preferably, where gelatin is the binder, an aqueous solution of gelatin having a water content of approximately 67% by weight may suitably be used as the binder. In those instances where gelatin is the binder it is the aqueous solution of gelatin that furnishes the bulk of the water essential to forming the mass of homogenized ingredients when mixed at the low temperatures (60°C). In the instance where gum arabic is the binder, it is suitably employed as a 50% aqueous solution and can advantageously replace glucose in some formulations particularly those in which sucrose is not employed as the sweetener.

When necessary, minor adjustment in moisture content of the paste can be effected by the addition of water. Preferably, the binder is present within the confectionery mass at a level of from 0.5 to 50% by weight, preferably 0.5 to 10% by weight.

Other optional ingredients may also be added to the confectionery mass. Typical examples of such optional ingredients include fat, coloring agents, flavoring agents, acidulating agents and mixtures thereof.

For the most part, the addition of any fat to the formulation for the processing of the confectionery is optional and, for confectionery of low caloric content, is avoided. The fat content can be zero or increased to within the below-mentioned range because it has little, if any, influence on the flavor or textural properties even when at the maximum value of the range. The primary purpose of the fat is to facilitate the machine wrapping of the candy product and a food grade hydrogenated palm oil as a component in the formulation was found to be satisfactory for this purpose. The level of optional fat is within the range of from 0 to 35% by weight, preferably 1 to 35% by weight.

The coloring, flavoring and acidulating agents employed in the confectionery formulation are the same as those employed in the prior art conventional process for making soft candy and are well known to those skilled in the confectionery manufacturing art. Preferred levels for coloring agent, when present, are of from 0.001 to 1% by weight. Flavoring agents, when present, are preferably within the range of from 0.1 to 3% by weight. For acidulating agents, it is preferred that these are present, if at all, at levels of from 0.2 to 2% by weight.

Although the mixture of ingredients employed in the present process may have to be processed under boiling temperature conditions (e.g. 107°C-165°C) it is essential that all ingredients are food grade and that processing conditions e maintained in a strict sense of cleanliness in order to minimize any contamination. A small, but effective, amount of antibacterial agent can be employed in the formulation when use of lower temperatures are employed.

With respect to the preparation of a pourable sugar confectionery mass, basically the process entails making a mix ot sugar, water and other components. The mix is thoroughly blended at a temperature in the range of from 107°C-165°C in order to make the super-saturated sugar solution with the desired moisture content as defined hereinbefore.

Where gelatin is used as a binder, it is preferred to separately prepare the super-saturated sugar solution at a temperature of 107°C-165°C and the gelatin solution at a temperature around 60°C prior to the mixing of the solutions. The temperature of the resulting solution is then at a temperature of 100°C or above and suitable for further processing. On cooling the viscosity of the mass will slowly increase and at a temperature below 35°C, preferably between 30 and 35°C, the gelatin will form a gel (3-dimensional structure) and as a result turn the mass into a solid. For processing purposes, it is generally not recommended to keep the boiled sugar/gelatin mixture at a high temperature, especially when the mixture contains acids, as the gelatin will gradually lose its gelling behavior. Accordingly, a holding temperature of not more than 60°C for several hours is recommended.

With respect to the preparation of an aerated sugar confectionery mass, basically, the process entails making a pourable sugar confectionery mass as described above, cooling it down to 45°C-50°C, aerating the mass up to the desired density.

After preparing the pourable or aerated confectionary mass, a cooling member is immersed into the confectionery mass prior to its solidification and is kept in the mass in an immersed position for a predetermined period of time to define a predetermined shell volume, the cooling member having a temperature lower than minus 50°C, and the pourable or aerated sugar confectionery mass solidifying, under cooling, inwardly to form the outer shape of the shell. The cooling member

The terms "cooling member" and "cold member" refer to a means that, when brought into direct contact with the pourable mass or aerated mass is capable of causing said mass to set whilst non sticking to the contacted surface. This is preferably achieved by use of a component that is solid at a temperature lower than minus 50°C but gaseous at room temperature (25°C).

Preferably, in the present process, a preheated confectionery mass as above described is poured into a mould cavity, following which, prior to the cooling off of the mass, a cooling member having a temperature lower than minus 50°C, preferably a temperature within the range between minus 70°C and minus 250°C, is immersed into the mass. The cold member is kept in the mass for a predetermined period of time to define a predetermined shell volume between said member and said mould cavity. This provides a rapid solidification of the mass starting from the cooling member and progressing outwardly. Since the present method does not cause the cooling member to stick to the solidified mass, the cooling member can be released easily from the solidified mass, e.g. by simply lifting it up and out of the mould cavity. The shell can then be further processed. Depending on the composition of the mass, solidification can take place through setting, i.e. immobilization in case of gum and jellies, or by viscosity increase upon cooling in the case of toffees and caramels.

The mould cavity employed in the present process is preferably one of a plurality of cavities in a mould plate which is made of hard polycarbonate and/or rubber, preferably of rubber. Rubber is a particularly preferred material in view of its flexible and water-repellent properties, thus making it suitable for processing a confectionery mass. As the set product does not stick to the material, the product can be pushed out of the flexible cavity without destroying the final product.

For the sake of clarity the description may sometimes refer to a single mould cavity and a single cooling member. However, it should be understood that the present process may suitably employ an apparatus equipped with a plurality of mould cavities and/or cooling members. In a particular embodiment of the invention mould plates carrying a plurality of mould cavities are continuously moved past the cooling member(s) and kept stationary when the confectionery shells are moulded by immersing the cooling member(s). Alternatively, the mould plates are advanced synchronously with the cooling members. The system comprises means for controlling the up and down movement of the cooling members as well as residence times in the immersed position in the mould cavities as well as means for controlling the advancing movements of the mould plates.

The predetermined period of time during which the cooling member is immersed in the confectionary mass is preferably from 10 to 30 seconds. However, the residence time may vary from 1 to 60 seconds, depending on the shape and size of the shell as well as on the prepared state of the confectionery mass. Further, it is believed that the residence time may also depend to some extent on the density of the cold member.

The cooling member may be shaped in any form suitable for imparting the inner shape of the confectionary mass in an underlying mould cavity, i.e.it may be shaped as a male part having any desirable outer shape.

As described hereinbefore, the cooling member has a temperature of lower than minus 50°C, preferably between minus 70 and minus 250°C. This low temperature is preferably obtained by use of solid carbon dioxide, more preferably selected from dry ice and dry snow which have a temperature of minus 78°C.

When desired, especially with the use of dry snow, the cooling member may be provided in a predetermined shape by shaping the dry snow in a mould cavity, e.g. as a male part having an outer shape corresponding to the inner shape of an underlying mould cavity. This may suitably be done by injecting carbon dioxide under high pressure into the mould and quickly reducing the pressure. The sudden decrease in pressure causes a temperature drop that solidifies carbon dioxide into dry snow of a temperature of minus 78°C. Once the mould has been filled almost completely, the shaped cooling member can be removed therefrom, optionally after having been moulded by applying external pressure to the dry snow. The mould is preferably made of a material that is able to withstand the high pressure caused by the injection of the cooling member. Materials suitable for such a mould are preferably selected from iron, steel like stainless steel, and mixtures thereof. A preferred material for use as material of the cold member mould is stainless steel.

The cold member mould is preferably equipped with at least one outlet. This outlet enables the release of the pressure which is present upon introduction of the pressurized gas into the mould, thereby providing for example the solidification of liquid carbon dioxide.

Once moulded, the cold member is removed from the mould and immersed in the sugar confectionery mass. Removal from the mould is preferably achieved via a removal means like a stick which is inserted into the mould prior to the injection of pressurized gas into the mould. Preferably, the removal means is provided at the inserting end, i.e. a few millimeters above the end of the removal means, with horizontal extensions so as to ensure that the cold member, in particular the dry snow does not easily fall off.

The external face of the cooling member or mould may suitably be provided with depressions or recesses to form corresponding elevations, such as ribs, partitions or text on the internal face of the shell.

In Fig. 1 is shown a schematic side view of a moulding device for preparing a cooling member with the help of a pressurized gas, comprising two upper parts (1) and (2) and one bottom part (3), all of which are made of stainless steel, and the three parts being secured to each other by securing means (4) and (5). The bottom part (3) contains an opening (6) into which a pipe (7) is fastened securely. The pipe (7) is sealed at the bottom end by a piston (8) that can be moved up and down the pipe (7). Thus, the volume of the chamber (9) which is defined by the pipe (7), the upper parts (1) and (2) and the piston (8) may be varied by moving the piston up and down. The pipe (7) additionally contains an inlet (10) that can be used to introduce pressurized gas into the chamber (9) if the piston (8) has been pulled out as shown in figure 1. The pipe (7) further comprises an exit opening (11) through which gas can leave the chamber (9) if the piston is in the pulled out position. The upper parts (1) and (2) together define a small hole (12) through which a stick (13) may be inserted into the chamber (9). Said stick (13) is secured to the upper part (1) by securing means (14). In order to produce a cooling member in accordance with the present invention, the piston (8) is pulled out, the stick (13) is inserted into the opening (12) and pressurized carbon dioxide is introduced through inlet (10). Whilst carbon dioxide gas is leaving the chamber (9) through exit opening (11) carbon dioxide snow will form inside the chamber (9). Once the chamber (9) has been largely filled with carbon dioxide snow, the piston (8) is moved upwards so as to compress the snow mass in the form of a plug (19) against the upper parts (1) and (2). The plug (19) can be removed from the chamber (9) by unfastening the securing means (4), (5) and (14) and by pulling out the stick (13)..

Figure 2 shows the same arrangement as figure 1, but this time the moulding device is viewed from above.

In an alternative embodiment of the invention the cold member may be produced by sublimating a layer of e.g. solid carbon dioxide onto a member made of a different material, e.g. stainless steel. The cold member thus produced may suitably be used in accordance with the present invention.

Once the cold member is obtained, it is immersed into the sugar confectionery mass to define a predetermined shell volume. Immersion will preferably occur prior to the cooling off of the sugar confectionery mass, preferably after preparation of the sugar confectionery mass. It is also feasible to employ a confectionary mass that has been allowed to cool off prior to the immersion of the cold member into the mass, provided said mass is maintained in a pourable state until the moment of immersion. In a particularly preferred embodiment, the confectionary mass is kept pourable by keeping the mass at a sufficiently high temperature.

Once the outer shell is obtained, the shell will be filled with a filling composition made of edible ingredients. Suitable edible ingredients are selected from sugar, edible binders, food coloring, flavoring, edible acidulant, and mixture thereof. As described hereinbefore, the coloring, flavoring and acidulating agents employed in the confectionery formulation are the same as those employed in the prior art conventional process for making soft candy and are well known to those skilled in the confectionery manufacturing art.

It is strongly preferred that the filling composition has a water activity in the range of from 0.3 to 0.75g/ml. Indeed, below such minimum water-activity, the perception of the filling becomes spongy rather than juicy, the latter being much preferred by consumers. If the water-activity exceeds the aforementioned maximum value, a tendency for microbiological spoilage will occur.

Preferably, the filling composition has a viscosity in the range of 1-60 Pa.s when measured with a Bohlin rheometer type VOR (plate-plate system with a diameter of 3cm), measured at a temperature of 25°C, rotation speed being 10 rotations per second (rps), i.e substantially equivalent to the shear rate that can be expected in the mouth on chewing a foodstuff. Still, the viscosity of the filling can further be reduced by increasing the temperature of the filling to a level at which the material of the shell would melt. Preferably, the temperature can be increased to a range of from 40 to 50°C.

Further, it is also preferred that the water-activity of the shell and that of the filling are substantially the same. By substantially, it is meant that the water-activity of shell and filling do not differ by more than 10%. Indeed, by having such substantially similar water-activity levels, the problem of moisture transfer is minimized.

Once filled, the shell is closed with a confectionery mass. It is not necessary that the closing is made of the same ingredient as the outer shell, although it is preferred for economical reasons and practical reasons to use the same confectionery mass as the one making up the outer shell.

Accordingly, there is provided a process for producing filled sugar confectionery articles, in particular filled wine gum, which comprises the steps of
1)- making an outer shell as per above described;
2)-filling the shell with edible ingredients, preferably selected from food coloring, flavoring, edible acidulant, and mixture thereof, the filling composition having a water activity in the range of from 0.3 to 0.75g/ml;
3)-closing the shell with a confectionery mass.

### Apparatus

Also provided herein is an apparatus for producing sugar confectionery articles, in particular wine gum articles, comprising:
a. one or more mould cavities for holding a confectionery mass;
b. means for transferring a liquid or aerated confectionary mass into said mould cavities;
c. one or more cooling members or means for producing such cooling members;
d. cooling means capable of reducing the temperature of the cooling members to a temperature lower than minus 50°C;
e. means for moving the one or more cooling members in and out of the one or more mould cavities;
f. the arrangement of mould cavities, cooling members and means e. being such that the cooling member can be moved into the mould cavities in such a way that a cup-shaped space is defined between the mould cavity and the cooling member.
All of these elements have been described in details hereinbefore, the description of these elements being applicable to the apparatus.

### Filled confectionery

By using the process of the present invention, filled confectioneries are obtained which contain a high amount of filling compared to filled confectionaries known from the prior art. Prior art processes typically employ a weight ratio of filling to the outer shell of less than 0.3, and in particular for filled wine gum a weight ratio below 0.1. This is regarded by consumers as insufficient for providing a full mouth filling.

Accordingly, there are provided filled confectioneries obtainable by the invention process that have a weight ratio of filling to the outer shell within the range of 0.5 to 5.

### Examples

The following is a non-limiting example according to the present invention.

### A- Preparation of a filling

### Filling composition:

**Table 1**

| Ingredients | % by weight |
|---|---|
| High maltose glucose syrup (40 DE/82% dry substance) | 80 |
| Sorbitol solution (70% dry substance) | 20 |

The filling composition was made by mixing together the above mentioned ingredients at a temperature of 50°C. Once a thin homogenous mixture was obtained, the following ingredients as given in Table 2 were added to the filling composition while stirring. The amounts in Table 2 are by weight of the resulting filling composition, i.e. including the ingredients of both Tables 1 and 2.

**Table 2**

| Ingredients | % by weight |
|---|---|
| Lemon flavour | 0.2 |
| Raspberry flavour | 0.15 |
| Citric acid (50% sol.) | 1.0 |
| Minors (Titanium dioxide) | Qs* |

| | |
|---|---|
| *qs: "quantum satis" | |

Where a transparent filling is desired, Titanium dioxide is not used.

### B- Preparation of a shell

### Shell composition:

**Table 3**

| Ingredients- Mix 1 | amount in grams |
|---|---|
| Water | 300 |
| Sorbitol solution (70% dry substance) | 60 |
| Gelatin 180 BI | 100 |

**Table 4**

| Ingredients- Mix 2 | amount in grams |
|---|---|
| Sugar | 400 |
| Water | 150 |
| glucose syrup (35 DE) | 400 |

The ingredients of mix 1 for making the gelatin solution were heated in a water bath at 60°C for 30 minutes while stirring, after which time, the foam formed was removed.

The ingredients of mix 2 for making the super-saturated sugar solution were then boiled until 125°C while stirring. Once the set temperature of 125°C was obtained, the mix 2 was ready for further processing, i.e. had the right moisture content of 6.8%.

Heated mix 1 was thereafter added to the boiled mix 2 and stirred. The resulting mixture was placed in a warm waterbath until all air bubbles had reached the mixture surface. The air bubbles foam were then removed.

The resulting mixture was distributed into 200g portions and to each portions was added minor amounts of flavours, colour and acid as given in Table 5 and stirred until a homogenous mixture was obtained. The amounts in Table 5 are by weight of the final confectionery composition, i.e. including the mixture (mix 1 and 2) mentioned above that has been previously boiled, having a weight of 772g, and the ingredients of Table 5.

**Table 5**

| Ingredients | % by weight |
|---|---|
| Raspberry flavour | 0.2 |
| Citric acid (50% sol.) | 1.0 |
| Lactic acid (60% sol., buffered) | 1.0 |
| Raspberry dried fruit flakes | 2.0 |
| Minors (Red Colour) | qs* |

| | |
|---|---|
| *qs: "quantum satis" | |

The obtained mass was poured into rubber moulds of desired shape. A cooling member made from preshaped carbon dioxide ice or snow was immersed until the confectionary mass had set. The preformed ice was hand made to the desired shape whereas the preformed snow was made using the cold member mould as shown in Figure 1 letting the liquid/gaseous carbon dioxide (12) go through the pipe (11) into the cavity (7) where it became solid. The preformed snow was then removed from its mould and immersed into the confectionery mass. Once the mass was set, traces of ice or snow were removed before depositing the filling.

### C- Preparation of the filled confectionary article

The filling described under A was poured into the shell of solidified confectionary mass. The filled shell was then closed by pouring the same confectionary mass as used for the outer shell. The finished filled shell was then allowed to set before being demoulded from the rubber mould.

The obtained wine gum had a weight ratio of filling to the outer shell of about 1 and was found to provide a good mouth filling perception and enhanced juicy character.

## Claims

1. A process for producing outer shells of sugar confectionery articles, wherein a cooling member is immersed into a pourable or aerated sugar confectionery mass prior to its solidification and is kept in the mass in an immersed position for a predetermined period of time to define a predetermined shell volume, the cooling member having a temperature lower than minus 50°C, and the pourable or aerated sugar confectionery mass solidifying, under cooling, inwardly to form the outer shape of the shell.

2. A process according to claim 1, wherein a mould cavity is filled with the pourable confectionery mass and wherein the cooling member is immersed into the mass prior to its solidification after it has been filled into the mould cavity and is kept in the mass in an immersed position for a predetermined period of time to define a predetermined shell volume between said member and the mould cavity.

3. A process according to either one of Claim 1 or 2, wherein the cooling member has a temperature between minus 70°C and minus 250°C.

4. A process according to any one of Claims 1-3, wherein the cooling member is made from solid carbon dioxide, preferably selected from dry ice and dry snow.

5. A process according to any one of Claims 1-4, wherein the process comprises preparing the cooling member in a predetermined shape by use of a mould.

6. A process according to Claim 5, wherein the material of the cooling member mould is selected from iron, steel, and mixtures thereof, preferably is stainless steel.

7. A process according to either one of Claim 5 or 6, wherein the cooling member mould is equipped with at least one outlet (8).

8. A process for producing filled sugar confectionery articles, in particular filled wine gum, which comprises the steps of
1)- making an outer shell as per defined in any one of Claims 1-7;
2)-filling the shell with edible ingredients, preferably selected from food coloring, flavoring, edible acidulant, and mixture thereof, the filling composition having a water activity in the range of from 0.3 to 0.75g/ml;
3)-closing the shell with a confectionery mass.

9. Apparatus for producing sugar confectionery articles comprising:
a. one or more mould cavities for holding a confectionery mass;
b. means for transferring a liquid or aerated confectionary mass into said mould cavities,
c. one or more cooling members or means for producing such cooling members;
d. cooling means capable of reducing the temperature of the cooling members to a temperature lower than minus 50°C;
e. means for moving the one or more cooling members in and out of the one or more mould cavities;
f. the arrangement of mould cavities, cooling members and means e. being such that the cooling member can be moved into the mould cavities in such a way that a cup-shaped space is defined between the mould cavity and the cooling member.

10. Apparatus according to Claim 9, wherein the apparatus is provided with means for controlling the residence time in immersed position.

11. Apparatus according to either one of Claim 9 or 10, wherein the cooling member is as defined in any one of claims 1-5.

12. Filled confectionery obtainable by the process of Claim 8, wherein the weight ratio of filling to the outer shell is within the range of 0.5 to 5.
